# EUROPÄISCHE PATENTSCHRIFT

(11) **EP 0 990 713 B1**
(45) Veröffentlichungstag und Bekanntmachung des Hinweises auf die Patenterteilung: **12.03.2003**
(21) Anmeldenummer: 99810718.9
(22) Anmeldetag: 10.08.1999
(51) Int. Cl.: C23C 4/10, C23C 4/12, C23C 24/10

(54) **Anwendung eines thermischen Spritzverfahrens zur Herstellung einer Wärmedämmschicht**
Thermal barrier coating process
Procédé de revêtement de barrière thermique

(30) Priorität: 07.09.1998 EP 98810886
(43) Veröffentlichungstag der Anmeldung: 05.04.2000
(73) Patentinhaber: Sulzer Markets and Technology AG, 8401 Winterthur (CH)
(72) Erfinder: Jansen, Franz, 8400 Winterthur (CH)
(74) Vertreter: Sulzer Management AG

(56) Entgegenhaltungen:
- EP-A- 0 705 911
- EP-A- 0 712 940
- DE-A- 2 328 395
- DE-A- 2 356 957
- US-A- 5 350 599
- US-A- 5 384 200

## Beschreibung

Die Erfindung betrifft eine Anwendung eines thermischen Spritzverfahrens zur Herstellung einer Wärmedämmschicht gemäss Oberbegriff von Anspruch 1 sowie Maschinenbauteile mit einer derartigen Wärmedämmschicht; ferner Verwendungen solcher Maschinenbauteile.

Aus der DE-C 23 28 395 ist ein Verfahren zum Herstellen eines Plasma-Spritzauftrags bekannt, bei dem Zirkoniumsilikat ZrSiO₄ (oder ZrO₂.SiO₂) aufgespritzt wird. Dieses Material, das sehr temperaturbeständig ("feuerfest") ist, liegt als Rohstoff in der Natur vor, nämlich als Sand aus dem Mineral Zirkon. Bei dem offenbarten Verfahren entsteht ein Spritzauftrag, der sich im wesentlichen aus einem Gemisch aus tetragonalem stabilem Zirkoniumoxid ZrO₂ und amorphem Siliciumdioxid SiO₂ zusammensetzt. Die tetragonale Modifikation des Zirkoniumoxids ist im Gegensatz zur monoklinen Modifikation, die normalerweise bei Umgebungstemperatur vorliegt, zur Ausbildung von Schutzschichten gut geeignet. Diese Schichten bilden bei hohen Temperaturen einen Schutz gegen Korrosion und Verschleiss.

Es ist ferner bekannt, ZrO₂ zur Herstellung von Wärmedämmschichten, beispielsweise als Beschichtung von Leitschaufeln in Gasturbinen, zu verwenden. Es ist Aufgabe der Erfindung, ein thermisches Spritzverfahren derart anzuwenden, dass eine Wärmedämmschicht aus Zirkon, das kostengünstiger als ZrO₂ ist, herstellbar ist. Dabei soll mittels geeigneter Massnahmen erreicht werden, dass die Wärmeleitfähigkeit einer solchen Wärmedämmschicht bis 900°C besser ist als jene der bekannten Schichten aus ZrO₂ (Wärmeleitzahl rund 0,6 -1,0 W/m.K bei atmosphärischem Druck und Raumtemperatur). Diese Aufgabe wird durch die in Anspruch 1 definierte Anwendung eines thermischen Spritzverfahrens gelöst, durch das ein grosser Teil des Zr in die Oxidform, ZrO₂, umgesetzt wird.

Die erfindungsgemässe Anwendung eines thermischen Spritzverfahrens betrifft die Herstellung einer Lage für eine Wärmedämmschicht aus einem pulverförmigen Material. Dieses Material besteht mindestens zu 80 mol% aus Zirkoniumsilikat ZrSiO₄, insbesondere aus dem Mineral Zirkon, und seine Pulverpartikel weisen Durchmesser mehrheitlich im Bereich zwischen 10 und 100 µm auf. Beim Aufspritzen werden die Partikel in einem Gasstrom unter reduzierenden Bedingungen und bei einer Temperatur höher als 2000°C zumindest teilweise aufgeschmolzen. Verfahrensparameter, unter anderem die Verweilzeit der Partikel in einem wärmeabgebenden Medium, insbesondere einem Plasma oder einer Flamme, die Temperatur des wärmeabgebenden Mediums und der auf die Partikel übertragene Impuls, werden so gewählt, dass die aus den Partikeln gebildete Lage eine Struktur mit lamellaren Elementen aufweist. Es werden geeignete Gase oder Gasgemische, vorzugsweise Wasserstoff, als reduzierende Mittel zur Freisetzung von siliciumhaltigen Gasen, insbesondere Siliciummonoxid SiO, verwendet und/oder es erfolgt eine thermische Freisetzung von siliciumhaltigen Gasen aufgrund einer hohen Temperatur des wärmeabgebenden Mediums.

Die Ansprüche 2 bis 4 beziehen sich auf vorteilhafte Ausführungsformen der erfindungsgemässen Anwendung gemäss Anspruch 1. Gegenstand der Ansprüche 6 bis 9 ist ein Maschinenbauteil mit einer ein- oder mehrlagigen Wärmedämmschicht, deren Lagen zumindest zu einem Teil unter Anwendung eines thermischen Spritzverfahrens gemäss einem der Ansprüche 1 bis 4 hergestellt ist. Anspruch 10 betrifft die Verwendung eines erfindungsgemässen Maschinenbauteils.

Messungen an Wärmedämmschichten, die unter Anwendung der erfindungsgemässen Massnahmen hergestellt worden sind, haben bei einem Druck von 0,02 mbar für die Wärmeleitzahl folgendes ergeben:
für ein Lanthanidoxide enthaltendes Ausgangsmaterial ZrSiO₄-4,5mol%Nd₂O₃ rund 0,22 W/m.K bei Raumtemperatur und rund 0,31 W/m.K bei 800°C (bei atmosphärischem Druck und Raumtemperatur ist die Wärmeleitzahl 0,6 W/m.K);
für ein Ausgangsmaterial ZrSiO₄-4,5mol%Dy₂O₃ rund 0,18 W/m.K bei Raumtemperatur und rund 0,24 W/m.K bei 800°C.

Nachfolgend wird die Erfindung anhand der Zeichnungen erläutert. Es zeigen:
- Fig. 1: schematisch dargestellt ein Gerät zur Durchführung eines Plasmaspritz-Verfahrens,
- Fig. 2: den Flug eines Pulverpartikels beim Aufspritzen auf ein Substrat,
- Fig. 3, 4: Querschnitte durch Pulverpartikel,
- Fig. 5: morphologische Eigenschaften einer erfindungsgemäss erzeugten Lage einer Wärmedämmschicht und
- Fig. 6-10: Querschnitte durch diverse mehrlagige Wärmedämmschichten.

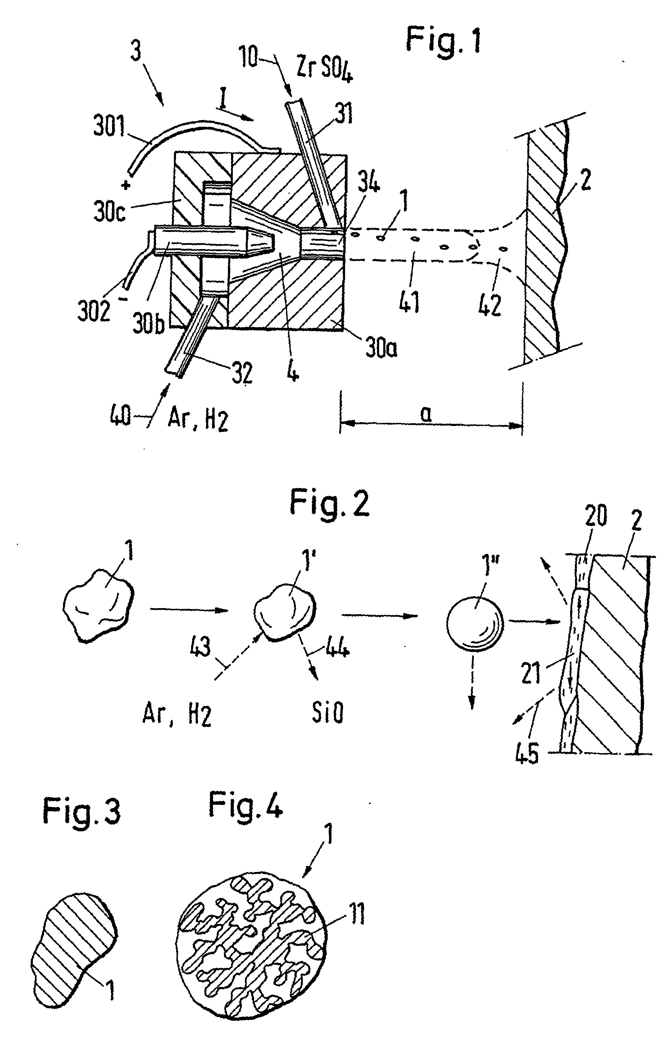

Das in Fig. 1 dargestellte Gerät 3 zur Durchführung des Spritzverfahrens umfasst eine aus Elektroden 30a, 30b gebildete Düse 34, Anschlüsse 301, 302 für einen elektrischen Gleichstrom I, eine Zuführleitung 32 für ein Plasmagas 40 aus Argon Ar sowie Wasserstoff H₂ und eine Zuführleitung 31 für das zu spritzende Material 10, ZrSiO₄, das in Form von Pulverpartikeln 1 in die Düse 34 einrieselt. Eine Kappe 30c aus einem Material, das ein elektrischer Nichtleiter ist, bildet den hinteren Abschluss eines Hohlraums 4.
In diesem wird ein Plasma 41 erzeugt, das als heisser Gasstrom 42 aus der Düse 34 austritt. Der Gasstrom 42 ist auf ein Substrat 2 gerichtet, das sich in einem Abstand a von der Austrittsöffnung der Düse 34 entfernt befindet. Er reisst die zugeführten Pulverpartikel 1 mit, beschleunigt sie je nach Anteil an Ar auf Geschwindigkeiten von 120 bis 250 m/s und erhitzt sie auf Temperaturen über 2000°C, so dass zumindest SiO₂ in eine flüssige Phase übergeht. Mit dem H₂-Anteil wird die Temperatur beeinflusst: je höher dieser ist, desto höher ist auch die Temperatur.

Für das Plasmagas lassen sich die Anteile an H₂ und Ar innerhalb relativ weiter Grenzen variieren; das Volumenverhältnis (H₂/Ar) soll bei Normalbedingungen einen Wert zwischen 0.01 und 0.5 aufweisen. Es sind auch andere Gase, beispielsweise He, als Komponenten des Plasmagases verwendbar.

Für H₂ und Ar wählt man beispielsweise Volumenströme von rund 5 - 20 bzw. 20 - 60 Normallitern pro Minute. Die Stromstärke I liegt im Bereich von 400 - 1000 A, vorzugsweise 500 - 700 A. Der Abstand a der Düse 34 zu dem zu beschichtenden Substrat 2 beträgt 50 -150 mm.

In Fig. 2 ist der Flug eines Partikels 1 im heissen, Ar und H₂ enthaltenden Gasstrahl 42 (Fig. 1) illustriert. Nach einem anfänglich festen Stadium durchläuft das Partikel 1 ein Stadium 1', in dem es oberflächlich verflüssigt ist. Das vollständig aufgeschmolzene Partikel 1" schlägt auf dem Substrat 2 auf, wobei es umgeformt zu einem lamellaren Element 21 erstarrt. Eine Vielzahl solcher Elemente 21 bildet eine Lage 20, die das Subtrat 2 oder bereits hergestellte Lagen bedeckt. Der Wasserstoff H₂ wirkt als reduzierendes Mittel auf das erhitzte Partikel 1' ein (Pfeil 43) und hat eine Freisetzung von siliciumhaltigen Gasen, insbesondere Siliciummonoxid SiO, zur Folge (Pfeil 44). Es erfolgt ausserdem eine thermische Freisetzung von siliciumhaltigen Gasen aufgrund der hohen Temperatur des Gasstroms 42. Nach dem Aufschlagen auf dem Substrat 2 können schliesslich noch weitere siliciumhaltige Zersetzungsprodukte freigesetzt werden (Pfeil 45). Untersuchungen an so gebildeten Schichten ergaben, dass das Atomverhältnis zwischen Zr und Si grösser als 1,1 ist (ursprünglich 1 im Zirkon). Anteile mit amorpher SiO₂-Phase wurden nicht gefunden; oder diese Anteile waren gering, kleiner als rund 6% (Gewichtsprozent). Anteile an ZrSiO₄ waren kleiner als 10%. Das Silicium Si ist teilweise im ZrO₂ gelöst. Für den Anteil an monoklinem ZrO₂ konnten Werte kleiner als 10% festgestellt werden. Das ZrO₂ lag hauptsächlich stabilisiert in der kubischen und/oder tetragonalen Modifikation vor, welche für die mechanischen Eigenschaften der Spritzschicht wesentlich günstiger als die monokline ist. Die Stabilisierung von ZrO₂ ergibt sich z. B. durch Zusatz von Lanthanidoxiden (Seltenerdoxide), Y₂O₃ oder Sc₂O₃.

Dem aufzutragenden Material können zur Stabilisierung des ZrO₂ zusätzlich Partikel aus Y₂O₃, Sc₂O₃ und/oder aus Lanthanidoxiden, insbesondere Nd₂O₃, Yb₂O₃ und/oder Dy₂O₃, zugemengt werden. Für den Anteil dieser Lanthanidoxide bzw. Y₂O₃ oder Sc₂O₃ wählt man mit Vorteil rund 3-10 mol%. Diese Zusätze ergeben eine Reduktion des Anteils an dem ZrO₂, das eine monokline Kristallstruktur aufweist. Dadurch wird die thermomechanische Beständigkeit der Spritzschicht verbessert.

Das zu spritzende Material kann aus weitgehend kompakten Pulverpartikeln 1 bestehen: siehe Fig. 3. Deren Durchmesser sollen mehrheitlich Werte im Bereich zwischen 10 und 100 µm aufweisen. Die Pulverpartikel 1 können auch porös ausgebildet sein, wie es die Fig. 4 zeigt. Diese porösen Partikel 1 ergeben Spritzschichten, die besonders arm an Si sind. Solche Partikel 1 lassen sich aus sehr fein gemahlenem Pulver gewinnen, welches in Form eines verdüsten Schlickers sprühgetrocknet wird. Es entstehen dabei kugelige Agglomerate mit einer Vielzahl von Teilchen 11, die schliesslich in einem Brennofen zusammengesintert werden. Eine Vorbehandlung des Spritzpulvers in einem thermischen Plasma bringt Vorteile wie besseres Fliessverhalten und verbesserte Homogenität bei Zusatz von Lanthanidoxiden bzw. Y₂O₃ oder Sc₂O₃.

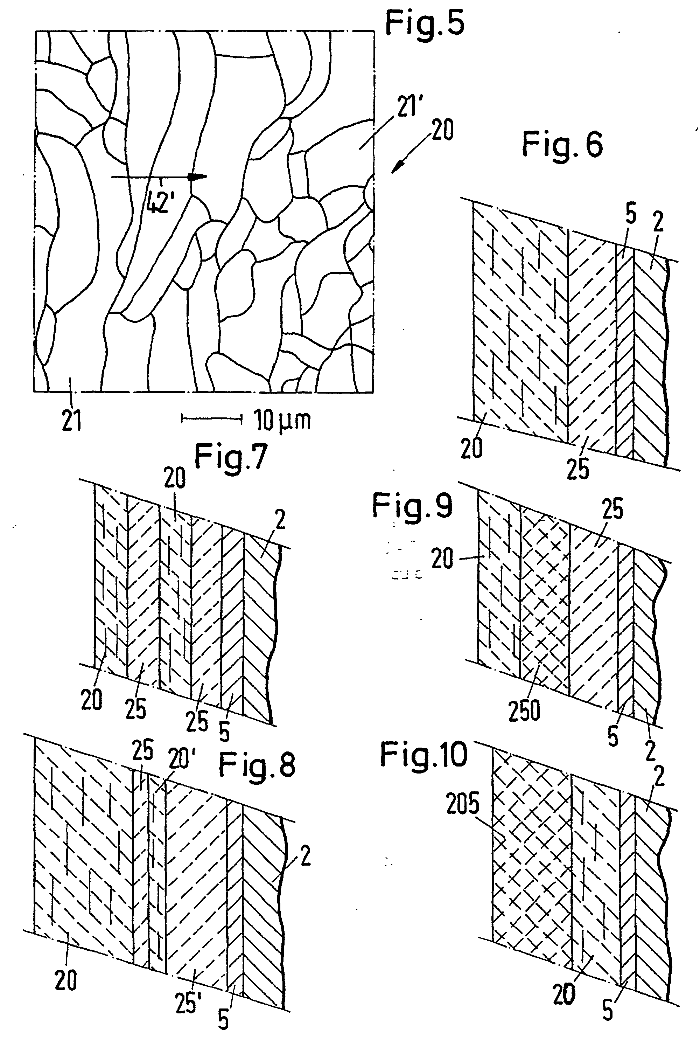

Fig. 5 zeigt den Aufbau einer aus Zirkon hergestellten Schicht mit lamellaren Elementen 21, wobei die Zeichnung anhand einer Probe (elektronenmikroskopisches Bild) angefertigt worden ist. Bei dieser zeichnerischen Darstellung sind nur Grenzlinien angegeben worden; diese waren teilweise nur schwach oder gar nicht erkennbar. Poren, die entlang der Grenzlinien - teilweise gehäuft - sichtbar waren, sind nicht gezeichnet worden. Neben den lamellaren Elementen 21 sind auch viele nichtlamellare Elemente 21' beobachtbar. Der Pfeil 42' gibt die Richtung des Gasstroms 42 an.

Eine Wärmedämmschicht bildet Teil eines Schichtverbundwerkstoffs - siehe Fig. 6 - wobei die Schicht über einen Haftgrund 5 mit dem Substrat 2 verbunden ist. Der Haftgrund 5 besteht aus einer metallischen Legierung, insbesondere aus einer Legierung der Formel MCrAIX, mit M = Ni, Co, NiCo, CoNi oder Fe und X = Y, Hf, Pt, Pa, Re, Si oder eine beliebige Kombination aus diesen. Die Wärmedämmschicht wird mit Vorteil mehrlagig aufgebaut, wobei die Lagen alternierend unter Verwendung von Zirkoniumoxid - als Lagen 25 dargestellt - und von Zirkoniumsilikat (Zirkon) - Lagen 20 - hergestellt sind.

Im Beispiel der Fig. 6 besteht die Wärmedämmschicht aus nur zwei Lagen 25 und 20. Für die äussere Lage 20, die eine hohe thermomechanische Stabilität aufweisen soll, wird mit Vorteil ein teil- oder vollstabilisiertem ZrO₂ vorgesehen. Die innere Lage 25 soll eine möglichst geringe Wärmeleitzahl aufweisen. Eine solche Kombination erlaubt eine geringere Schichtdicke im Vergleich zu herkömmlichen Beschichtungen, die für Brennkammern von Gasturbinen verwendet werden.

Das Beispiel der Fig. 7 zeigt eine Vielzahl von Lagen 20, 25, die alle ungefähr gleich dick sind (rund 100 µm). Die Lagen 20, 25 können auch verschieden dick sein - siehe Fig. 8: eine dicke Basisschicht 25', rund 300 µm; anschliessend zwei dünne Schichten 20', 25, jeweils 20-40 µm; und schliesslich noch einmal eine dicke Schicht 20.

Im Beispiel der Fig. 9 ist eine Übergangsschicht 250 zwischen einer Basisschicht 25 und einer Deckschicht 20 angeordnet. Für diese Schicht 250 ist eine kontinuierlich sich ändernde Zusammensetzung vorgesehen, die einen Übergang von der Zusammensetzung der Basisschicht 25 zu jener der Deckschicht 20 bildet.

Im Beispiel der Fig. 10 ist die Basisschicht 20 unter Verwendung von Zirkon hergestellt. Eine keramische Deckschicht 205 weist wie die Übergangsschicht 250 eine kontinuierlich sich ändernde Zusammensetzung auf.

Statt mittels Plasmaspritzens lassen sich Zirkon-Wärmedämmschichten auch mittels anderer thermischer Spritzverfahren, bei denen das wärmeabgebende Medium durch eine Flamme gebildet ist, herstellen.

Die beschriebenen Wärmedämmschichten lassen sich mit Vorteil bei Maschinenbauteilen verwenden, die in einer Gasturbine oder in einem Dieselmotor eingesetzt werden. Bei diesen Verwendungen dienen die Wärmedämmschichten jeweils als Schutz gegen ein heisses Verbrennungsgas.

## Patentansprüche

1. Anwendung eines thermischen Spritzverfahrens zur Herstellung einer Lage (20) für eine Wärmedämmschicht aus einem pulverförmigen Material (10), das mindestens zu 80 mol% aus Zirkoniumsilikat ZrSiO₄, insbesondere aus dem Mineral Zirkon besteht, und dessen Pulverpartikel (1) Durchmesser mehrheitlich im Bereich zwischen 10 und 100 µm aufweisen, bei welchem Verfahren die Partikel in einem Gasstrom (42) unter reduzierenden Bedingungen und bei einer Temperatur höher als 2000°C zumindest teilweise aufgeschmolzen werden,
**dadurch gekennzeichnet, dass** Verfahrensparameter, unter anderem die Verweilzeit der Partikel in einem wärmeabgebenden Medium, insbesondere einem Plasma (41) oder einer Flamme, die Temperatur des wärmeabgebenden Mediums und der auf die Partikel übertragene Impuls, so gewählt werden, dass die aus den Partikeln gebildete Lage (20) eine Struktur mit lamellaren Elementen (21) aufweist, wobei geeignete Gase oder Gasgemische, vorzugsweise Wasserstoff, als reduzierende Mittel zur Freisetzung von siliciumhaltigen Gasen, insbesondere Siliciummonoxid SiO, verwendet werden und/oder eine thermische Freisetzung von siliciumhaltigen Gasen aufgrund einer hohen Temperatur des wärmeabgebenden Mediums erfolgt.

2. Anwendung eines thermischen Spritzverfahrens nach Anspruch 1, **dadurch gekennzeichnet, dass** das Material (10) aus weitgehend kompakten Pulverpartikeln (1) besteht, oder dass die Pulverpartikel porös ausgebildet, insbesondere jeweils aus einer Vielzahl von zusammengesinterten Teilchen (11) aufgebaut sind, und dass das Material (10) mit Vorteil in einer homogenisierten, in einer mittels eines thermischen Plasmas nachbehandelten Form verwendet wird.

3. Anwendung eines thermischen Spritzverfahrens nach Anspruch 1 oder 2, **dadurch gekennzeichnet, dass** dem aufzutragenden Material (10) zusätzlich Y₂O₃, Sc₂O₃ und/oder Lanthanidoxide, insbesondere Nd₂O₃, Yb₂O₃ und/oder Dy₂O₃, zugemengt wird, und dass der Anteil dieser Lanthanidoxide bzw. Y₂O₃ oder Sc₂O₃ rund 3 - 10 mol% beträgt.

4. Anwendung eines thermischen Spritzverfahrens nach einem der Ansprüche 1 bis 3, **dadurch gekennzeichnet, dass** die oder eine Lage (20) der Wärmedämmschicht mittels Plasmaspritzens aufgebracht wird, wobei ein Gerät (3) zur Durchführung des Verfahrens einen aus Elektroden (30a, 30b) gebildeten Hohlraum (4) mit Düse (34), Anschlüsse (301, 302) für einen elektrischen Gleichstrom (I) und Zuführleitungen (32, 31) für ein den Gasstrom bildendes Plasmagas (40) sowie für das zu spritzende Material (10) umfasst.

5. Anwendung nach Anspruch 4, **dadurch gekennzeichnet, dass** das Plasmagas (40) ein Gemisch von H₂ und Ar ist, mit einem Volumenverhältnis bei Normalbedingungen von 0.01 - 0.5 H₂/Ar, beispielsweise mit Volumenströmen für H₂ und Ar von rund 5 - 20 bzw. 20 - 60 Normallitern pro Minute, dass die Stromstärke (I) im Bereich von 400 - 1000 A, vorzugsweise 500 - 700 A, liegt und dass der Abstand (a) der Düse (34) zu einem zu beschichtenden Substrat (2) 50 - 150 mm beträgt.

6. Maschinenbauteil mit einer ein- oder mehrlagigen Wärmedämmschicht, deren Lagen (20, 25) zumindest zu einem Teil unter Anwendung eines thermischen Spritzverfahrens gemäss einem der Ansprüche 1 bis 4 hergestellt ist, **dadurch gekennzeichnet, dass** in der oder den so erzeugten Lage(n)(20) das Atomverhältnis von Zr zu Si grösser als 1,1 ist, wobei insbesondere Anteile mit amorpher SiO₂-Phase nicht vorliegen oder kleiner als rund 6 Gew% sind, Anteile an ZrSiO₄ kleiner als 10 Gew% sind, Anteile an monoklinem ZrO₂ kleiner als 10 Gew% sind, ZrO₂ hauptsächlich stabilisiert in der kubischen und/oder tetragonalen Modifikation vorliegt und Si teilweise im ZrO₂ gelöst ist, wobei ferner eine äussere Lage (20) aus teil- oder vollstabilisiertem ZrO₂ besteht.

7. Maschinenbauteil nach Anspruch 6, **dadurch gekennzeichnet, dass** bei Normaldruck und bis 900°C die Wärmeleitzahl der Wärmedämmschicht kleiner als 0,8 W/m.K, vorzugsweise kleiner als 0,6 W/m.K ist.

8. Maschinenbauteil nach Anspruch 6 oder 7, **dadurch gekennzeichnet, dass** die Wärmedämmschicht (20, 25) Teil eines Schichtverbundwerkstoffs bildet, wobei die Wärmedämmschicht über einen Haftgrund (5) mit einem Substrat (2) verbunden ist und der Haftgrund aus einer metallischen Legierung besteht, insbesondere aus MCrAIX, mit M = Ni, Co, NiCo, CoNi oder Fe und X = Y, Hf, Pt, Pa, Re, Si oder eine beliebige Kombination aus diesen.

9. Maschinenbauteil nach Anspruch 8, **dadurch gekennzeichnet, dass** die Wärmedämmschicht (20, 25, 20', 25') zwei- oder mehrlagig ausgebildet ist, wobei die Lagen unter Verwendung von Zirkoniumsilikat und von Zirkoniumoxid, insbesondere in einer alternierend Anordnung, hergestellt sind.

10. Verwendung eines Maschinenbauteils gemäss einem der Ansprüche 7 bis 9 in einer Gasturbine oder in einem Dieselmotor, wobei Wärmedämmschichten jeweils als Schutz gegen ein heisses Verbrennungsgas vorgesehen sind.

## Claims

1. Use of a thermal spray method for the manufacture of a layer (20) for a heat insulating coating of a material (10) in powder form which consists at least to 80 mol% of zirconium silicate ZrSiO₄, in particular of the mineral zircon, and the majority of the powder particles (1) of which have diameters in the range between 10 and 100 µm, the particles being at least partially melted in this method in a gas flow (42) under reducing conditions and at a temperature greater than 2000°C,
**characterised in that** method parameters, among others the dwell time of the particles in a heat imparting medium, in particular a plasma (41) or a flame, the temperature of the heat imparting medium and the momentum which is transferred to the particles are chosen in such a manner that the layer (20) which is formed of the particles has a structure with lamellar elements (21), with suitable gases or gas mixtures, preferably hydrogen, being used as reducing means for the liberation of gases containing silicon, in particular silicon monoxide SiO and/or with a thermal liberation of gases containing silicon taking place as a result of a high temperature of the heat imparting medium.

2. Use of a thermal spray method in accordance with claim 1 **characterised in that** the material (10) consists of largely compact powder particles (1); or **in that** the powder particles are porously formed, in particular are built up in each case of a large number of sintered together particles (11); and **in that** the material (10) is advantageously used in a homogenised form which is subsequently treated with a thermal plasma.

3. Use of a thermal spray method in accordance with claim 1 or claim 2 **characterised in that** Y₂O₃, Sc₂O₃ and/or lanthanide oxides, in particular Nd₂O₃, Yb₂O₃ and/or Dy₂O₃, are additionally admixed to the material (10) to be applied; and **in that** the proportion of these lanthanide oxides or Y₂O₃ or Sc₂O₃ respectively amounts to about 3 - 10 mol%.

4. Use of a thermal spray method in accordance with one of the claims 1 to 3 **characterised in that** the layer (20) of the heat insulating coating or one layer of the heat insulating coating is applied by means of plasma spraying, with a device (3) for carrying out the method comprising a cavity (4) formed of electrodes (30a, 30b) with a nozzle (34), connections (301, 302) for an electrical direct current (I) and supply lines (32, 31) for a plasma gas (40) which forms the gas flow as well as for the material (10) to be sprayed.

5. Use in accordance with claim 4 **characterised in that** the plasma gas (40) is a mixture of H₂ and Ar, with a volume ratio under normal conditions of 0.01 - 0.05 H₂/Ar, for example with volume flows for H₂ and Ar of about 5 - 20 and 20 - 60 normal litres per minute respectively; **in that** the current strength (I) lies in the range from 400 - 1000 A, preferably 500 - 700 A; and **in that** the distance (a) of the nozzle (34) from a substrate (2) to be coatinged amounts to 50 - 150 mm.

6. Machine component comprising a one or more layered heat insulating coating of which the layers (20, 25) are manufactured at least partly using a thermal spray method in accordance with one of the claims 1 to 4, **characterised in that** the atomic ratio of Zr to Si is greater than 1.1 in the thus produced layers (20), in particular with constituents with the amorphous SiO₂ phase not being present or being less than about 6 % by weight, proportions of ZrSiO₄ being less than 10 % by weight, proportions of monoclinic ZrO₂ being less than 10 % by weight, ZrO₂ being present mainly stabilised in cubic and/or tetragonal modifications and Si being partly dissolved in the ZrO₂, and with the outer layer (20) furthermore consisting of partly or fully stabilised ZrO₂.

7. Machine component in accordance with claim 6 **characterised in that** at normal pressure and up to 900°C the thermal conductivity index of the heat insulating coating is less than 0.8 W/m.K, preferably less than 0.6 W/m.K.

8. Machine component in accordance with claim 6 or claim 7 **characterised in that** the heat insulating coating (20, 25) forms part of a layered composite material, with the heat insulating coating being bonded via a primer (5) to a substrate (2) and the primer consisting of a metallic alloy, in particular of MCrAlX, with M = Ni, Co, NiCo, CoNi or Fe and X = Y, Hf, Pt, Pa, Re, Si or an arbitrary combination of these.

9. Machine component in accordance with claim 8 **characterised in that** the heat insulating coating (20, 25, 20', 25') is formed in two or more layers, with the layers being manufactured using zirconium silicate and zirconium oxide, in particular in an alternating arrangement.

10. Use of a machine component in accordance with one of the claims 7 to 9 in a gas turbine or in a diesel engine, with heat insulating coatings in each case being provided as protection against a hot combustion gas.

## Revendications

1. Utilisation d'un procédé de pulvérisation thermique au pistolet pour la production d'une couche (20) pour une barrière thermique en un matériau pulvérulent (10), qui comprend au moins jusqu'à 80% en moles d'un silicate de zirconium ZrSiO₄, en particulier de zircon minéral, et dont les particules de poudre (1) présentent des diamètres majoritairement compris entre 10 et 100µm, procédé dans lequel les particules sont au moins partiellement fondues dans un courant de gaz (42) en conditions réductrices et à une température supérieure à 2000°C,
**caractérisée en ce que** les paramètres du procédé, entre autres le temps de résidence de la particule dans un fluide exothermique, en particulier un plasma (41) ou une flamme, la température du fluide exothermique et l'impulsion transmise à la particule sont choisis de façon que la couche (20) formée des particules présente une structure avec des éléments lamellaires (21) où des gaz appropriés ou mélanges de gaz, avantageusement de l'hydrogène, sont utilisés en tant qu'agents réducteurs pour la libération des gaz contenant du silicium, en particulier de l'oxyde de silicium SiO, et/ou une libération thermique des gaz contenant du silicium, en raison d'une haute température du fluide exothermique se produit.

2. Utilisation d'un procédé de pulvérisation thermique au pistolet selon la revendication 1, **caractérisée en ce que** le matériau (10) se compose de particules de poudre très compactes (1), ou bien que les particules de poudre sont poreuses, en particulier formées d'un grand nombre de petites particules frittées ensemble (11) et que le matériau (10) est avantageusement utilisé sous une forme homogénéisée, post-traitée au moyen d'un plasma thermique.

3. Utilisation d'un procédé de pulvérisation thermique au pistolet selon la revendication 1 ou 2, **caractérisée en ce qu'**au matériau à appliquer (10) est mélangé en plus Y₂O₃, Sc₂O₃ et/ou des oxydes de lanthanides, en particulier Nd₂O₃, Yb₂O₃ et/ou Dy₂O₃, et **en ce que** la quantité de ces oxydes de lanthanides, respectivement de Y₂O₃ ou de Sc₂O₃ est de l'ordre de 3-10% en moles.

4. Utilisation d'un procédé de pulvérisation thermique au pistolet selon l'une quelconque des revendications 1 à 3, **caractérisée en ce que** la ou une couche (20) de la barrière thermique est appliquée au moyen d'une pulvérisation au plasma et un appareil (3) pour la mise en oeuvre du procédé se compose d'une cavité (4) formée d'électrodes (30a, 30b) avec buse (34), raccords (301, 302) pour un courant continu électrique (I) et conduites d'amenée (32, 31) pour un gaz de plasma formant le courant de gaz (40) ainsi que pour le matériau à pulvériser (10).

5. Utilisation selon la revendication 4, **caractérisée en ce que** le gaz de plasma (40) est un mélange de H₂ et Ar, avec un rapport en volume en conditions normales de 0,01-0,5 H₂/Ar, par exemple avec des courants en volume pour H₂ et Ar d'environ 5-20 ou respectivement 20-60 litres normaux par minute, **en ce que** l'intensité du courant (I) se trouve de l'ordre de 400-1000 A, avantageusement de 500-700 A, et **en ce que** la distance (a) de la buse (34) à un substrat à enduire est de 50-150 mm.

6. Pièce de machine avec une barrière thermique à une ou à plusieurs couches, dont les couches (20, 25) sont produites au moins partiellement en utilisant un procédé de pulvérisation thermique au pistolet selon l'une quelconque des revendications 1 à 4,
**caractérisée en ce que** dans la ou les couches (20) ainsi produites, le rapport atomique de Zr à Si est plus grand que 1,1 et, en particulier, les quantités avec phase de SiO₂ amorphe ne sont pas présentes ou sont plus faibles qu'environ 6% en poids, les quantités de ZrSiO₄ sont plus petites que 10% en poids, les quantités de ZrO₂ monoclinique sont plus petites que 10% en poids, ZrO₂ se trouve principalement stabilisé dans la modification cubique et/ou tétragonale et Si est partiellement dissous dans ZrO₂, et de plus une couche externe (20) se compose de ZrO₂ partiellement ou totalement stabilisé.

7. Pièce de machine selon la revendication 6,
**caractérisée en ce qu'**à pression normale et jusqu'à 900°C, la conductivité thermique de la barrière thermique est plus petite que 0,8 W/m.K, avantageusement plus petite que 0,6 W/m.K.

8. Pièce de machine selon la revendication 6 ou 7,
**caractérisée en ce que** la barrière thermique (20, 25) fait partie d'une matière première composite et la barrière thermique est reliée par une couche passivante (5) à un substrat (2) et la couche passivante se compose d'un alliage métallique, en particulier de MCrAlX, avec M = Ni, Co, NiCo, CoNi ou Fe et X = Y, Hf, Pt, Pa, Re, Si ou toute combinaison souhaitée de ceux-ci.

9. Pièce de machine selon la revendication 8,
**caractérisée en ce que** la barrière thermique (20, 25, 20', 25') et configurée en deux ou plusieurs couches et les couches sont produites en utilisant du silicate de zirconium et de l'oxyde de zirconium, en particulier en un agencement alterné.

10. Utilisation d'une pièce de machine selon l'une quelconque des revendication 7 à 9 dans une turbine à gaz ou un moteur diesel, où des barrières thermiques sont prévues en tant que protection contre un gaz chaud de combustion.
